Europäisches Patentamt

European Patent Office

Office européen des brevets

(19)

(11) EP 0 777 113 A1

(12) EUROPÄISCHE PATENTANMELDUNG

(43) Veröffentlichungstag:
04.06.1997 Patentblatt 1997/23

(51) Int Cl.⁶: G01J 3/46, A61C 19/10

(21) Anmeldenummer: 96810803.5

(22) Anmeldetag: 18.11.1996

(84) Benannte Vertragsstaaten:
AT CH DE DK ES FI FR GB IT LI NL SE

(30) Priorität: 01.12.1995 CH 3405/95

(71) Anmelder: MHT Optic Research AG
8155 Niederhasli (CH)

(72) Erfinder:
• Berner, Markus
CH-8155 Niederhasli (CH)
• Gobbetti, Carlo
I-37128 Verona (IT)

(74) Vertreter: Rottmann, Maximilian R.
c/o Rottmann, Zimmermann + Partner AG
Glattalstrasse 37
8052 Zürich (CH)

(54) **Verfahren und Vorrichtung zur Bestimmung der Farbvalenz von transluzenten Körpern**

(57) Eine Vorrichtung zur Bestimmung der Farbvalenz von transluzenten Körpern weist zwei Lichtquellen (11, 12) auf, mittels welchen über ein Lichtleiterfasersystem (18) zwei unterschiedlich grosse Lichtpunkte auf dem Messkörper (M) erzeugt werden können. Das vom Messkörper (M) reflektierte Licht wird von einer Optik (21) erfasst und über ein Lichtleiterbündel (22) an ein Spektrometer (23) weitergeleitet. Danach wird das Messsignal digitalisiert und anschliessend rechnerisch in einer Prozessoreinheit (3) ausgewertet. Durch zwei unterschiedlich grosse Lichtpunkte kann der bei der Bestimmung der Farbvalenz von transluzenten Messkörpern entstehende Messfehler ermittelt und korrigiert werden. Dazu wird auf Referenzwerte zurückgegriffen, welche vorgängig an opaken Referenzproben ermittelt und in einem Speicherbaustein (32) der Vorrichtung abgelegt wurden. Zur Elimination des störenden Umgebungslichtes kann eine weitere Messung ohne Beleuchtung durchgeführt werden.

Fig.1

## Beschreibung

Die Erfindung betrifft ein Verfahren zur Bestimmung der Farbvalenz von transluzenten Körpern gemäss dem Oberbegriff des Anspruchs 1 sowie eine Vorrichtung zur Bestimmung der Farbvalenz von transluzenten Körpern nach dem Oberbegriff des Anspruchs 8.

Die Bestimmung des Farbtones von transluzenten Körpern ist ein in der Zahntechnik häufig zur Anwendung kommendes Verfahren. Dabei soll aus einer vorliegenden Anzahl von Musterprothesen die farblich am besten mit dem zu ersetzenden Zahn übereinstimmende Prothese ausgewählt werden. Anstelle des zu ersetzenden Zahns wird dabei oft auch der benachbarte bzw. die benachbarten Zähne zur Farbbestimmung herangezogen.

Von den Herstellern der Grundmaterialien für Zahnprothesen sind Sortimente mit einer Vielzahl von unterschiedlich zusammengesetzten Musterprothesen erhältlich, welche mit je einer Zuordnungsnummer versehen sind. Soll ein Zahnarzt oder Zahntechniker eine Zahnprothese herstellen, so geht er zur Zeit vereinfacht dargestellt in etwa wie folgt vor: Er vergleicht die Farbe des zu ersetzenden Zahnes visuell mit denjenigen der Musterprothesen und wählt aus den Musterprothesen das farblich am nächsten beim natürlichen Zahn liegende Muster aus. Der Zahnarzt oder Zahntechniker weiss nun aufgrund der Angaben des Herstellers, wie die entsprechende Musterprothese aufgebaut wurde und kann nun den künstlichen Zahn in der richtigen Farbe anfertigen. Dieses Vorgehen ist einerseits sehr aufwendig und kann andererseits zu Fehlern in Bezug auf den Farbton des künstlichen Zahnes führen.

Um die Farbvalenz von transluzenten Körpern messtechnisch zu erfassen, sind Verfahren und Vorrichtungen bekannt, bei denen der zu messende Körper bzw. ein Teil davon in Form eines Lichtflecks beleuchtet und das reflektierte Licht auf einer Fläche definierter Grösse, Messfleck genannt, erfasst und anschliessend ausgewertet. Da jedoch sowohl die Erfassungsfläche wie auch der auf den Messkörper projizierte Lichtfleck nicht unendlich gross sind bzw. sein können, entsteht in der Praxis ein Messfehler und zwar deshalb, weil einerseits ein Teil des Lichtes den Messfleck durch den transluzenten Messkörper hindurch verlässt und weil andererseits Licht von aussen in den Messfleck eindringt. Da der den transluzenten Messkörper verlassende Lichtstrom nicht gleich gross ist, wie der von aussen in den Messfleck eingekoppelte und von der Optik aufgenommene Lichtstrom wird das Messresultat abhängig von der Transluzenz des Messkörpers verfälscht.

Dieser Messfehler führt dazu, dass mit den heute bekannten Systemen die Farbvalenz von unbekannten, transluzenten Messkörpern nur unzureichend bestimmt werden kann.

Aus der EP 0 250 519 ist ein Verfahren sowie eine Einrichtung zum Bestimmen der Farbe eines Gegenstandes, insbesondere einer Zanhprothese bekannt.

Die Einrichtung besteht im wesentlichen aus einem Spectro-Colorimeter, einem Mikroprozessor, einer Lichtquelle, einem Lichterfassungsinstrument sowie einer Anordnung von Photozellen. Zur internen Kalibrierung der Einrichtung bzw. der Photozellen sind zwei Leuchtdioden vorgesehen, deren emittiertes Licht unterschiedliche Wellenlänge aufweist. Das Lichterfassungsinstrument dient sowohl dem Beleuchten des Messkörpers als auch dem Erfassen des vom Messkörper reflektierten Lichts. Dazu weist das Lichterfassungsinstrument einen zylindrisch ausgebildeten Kopf auf, in welchen zwei nebeneinander angeordnete Lichtleiter eingelassen sind. Der eine Lichtleiter dient dem Beleuchten des Messkörpers währenddem der andere zum Erfassen des vom Messkörper reflektierten Lichts vorgesehen ist. Das reflektierte Licht wird über den Lichtleiter dem Spektro-Kolorimeter zugeführt, mittels welchem die diffuse Spektralreflexion des Zahnes bestimmt wird. Zum Definieren der Prothesenfarbe werden anschliessend rechnerisch die trichromatischen Farbanteile des Zahnes bei verschiedenen Beleuchtungen bestimmt.

In der Praxis hat sich jedoch gezeigt, dass die mit einer derartigen Einrichtung erzielbare Farbbestimmung der Zahnprothese bezüglich des optischen Empfindens des Menschen ungenügend ist. Dies dürfte auf die eingangs erläuterte Problematik zurückzuführen sein, welche sich beim Bestimmen der Farbvalenz von transluzenten Körpern ergibt, da die künstlichen Zähne (Prothesen) nicht die genau gleiche Transluzenz aufweisen wie die natürlichen Zähne. Durch den asymmetrischen Aufbau des Lichterfassungsinstruments bezüglich des Licht emittierenden und des Licht erfassenden Lichtleiters ergeben sich zudem weitere, das Endergebnis verfälschende Fehlermöglichkeiten, da das Messergebnis unterschiedlich ausfallen kann, je nachdem unter welchem Winkel der Zahn beleuchtet wird bzw. das Lichterfassungsinstrument auf den Zahn gerichtet wird.

Es ist somit die Aufgabe der Erfindung, ein Verfahren gemäss dem Oberbegriff des Anspruchs 1 dahingehend zu verbessern, dass die Farbvalenz von transluzenten Messkörpern genauer als bisher ermittelt werden kann.

Diese Aufgabe wird durch die im Kennzeichen des Anspruchs 1 aufgeführten Verfahrensschritte gelöst.

Im gegebenen Zusammenhang ist unter dem Begriff Farbvalenz der optische Eindruck einer Farbe auf den Betrachter zu verstehen.

Durch die Anwendung eines Verfahrens, bei welchem zumindest zwei Messungen mit jeweils unterschiedlich grosser Beleuchtungsfläche und/oder unterschiedlich grosser Erfassungsfläche durchgeführt werden, und bei welchem aufgrund der Messwerte und anhand von an opaken Referenzproben ermittelten Referenzwerten ein Korrekturfaktor errechnet wird, mittels welchem der/die Messwert(e) korrigiert und damit die Farbvalenz des Messkörpers unter Berücksichtigung der Transluzenz desselben bestimmt wird, kann die Farbvalenz des Messkörpers wesentlich genauer als bisher ermittelt werden.

Vereinfacht ausgedrückt beruht das Prinzip dieses Verfahrens darauf, dass durch zumindest zwei Messungen mit jeweils unterschiedlich grosser Beleuchtungsfläche und/oder unterschiedlich grosser Erfassungsfläche eine Masszahl für die Transluzenz des Messkörpers ermittelt werden kann. Aufgrund dieser Masszahl und aufgrund von an opaken Referenzproben ermittelten Referenzwerten kann schliesslich ein Korrekturfaktor errechnet werden, mittels welchem der/die Messwert(e) korrigiert und die Farbvalenz eines transluzenten Messkörpers wesentlich genauer als bisher bestimmt werden kann.

Ein weiteres Problem bei der Bestimmung der Farbvalenz des Messkörpers stellt das Umgebungslicht dar. Umgebungslicht dringt in den Messkörper und von da auch in das Messsystem ein. Es versteht sich, dass das Messergebnis durch dieses Umgebungslicht zwangsläufig verfälscht wird. Diesem Problem wird bei einem bevorzugten Verfahren Rechnung getragen, indem zur Bestimmung des Umgebungslichtes eine zusätzliche Messung am Messkörper ohne Beleuchtung durchgeführt und der dabei ermittelte Messwert bei der rechnerischen Auswertung berücksichtigt wird. Die rechnerische Berücksichtigung des Umgebungslichtes kann auf einfache Weise erfolgen, indem der dem Umgebungslicht entsprechende Messwert vom Messwert mit Beleuchtung subtrahiert wird.

Eine weitere Aufgabe der Erfindung besteht darin, eine Vorrichtung zur Bestimmung der Farbvalenz von transluzenten Körpern gemäss dem Oberbegriff des Anspruchs 8 derart zu verbessern, dass die Farbvalenz des Messkörpers genauer als bisher bestimmt werden kann.

Diese Aufgabe wird dadurch gelöst, dass zumindest zwei Lichtquellen zum Erzeugen unterschiedlich grosser Beleuchtungsflächen und/oder zumindest zwei Optiken zum Erfassen des reflektierten Lichts auf unterschiedlich grossen Flächen vorgesehen sind.

Zur Erzeugung von zwei unterschiedlich grossen Beleuchtungsflächen wird bei einer bevorzugten Ausführungsform vorgeschlagen, zwei Lichtquellen vorzusehen, welche optisch mit je einem aus einer Vielzahl von einzelnen Fasern bestehenden Lichtleiterfaserbündel gekoppelt sind, wobei die beiden Lichtleiterfaserbündel hinter den Lichtquellen zu einem gemeinsamen Strang zusammengeführt sind, und wobei der gemeinsame Strang im Sondenkopf zu einer ringförmigen Lichtquelle aufgeteilt ist, deren einzelne Fasern bezüglich der Ringfläche gleichmässig verteilt sind. Mit einer derartigen Vorrichtung können auf dem Messkörper zwei unterschiedlich grosse, konzentrische Beleuchtungsflächen erzeugt werden.

Nachfolgend wird ein Ausführungsbeispiel der Erfindung anhand der beiliegenden Zeichnungen näher erläutert. In den Zeichnungen zeigen:

Fig. 1      den schematischen Aufbau einer Vorrichtung zur Bestimmung der Farbvalenz von transluzenten Körpern;

Fig. 2      das Beleuchtungs- sowie das Erfassungssystem der in Fig. 1 dargestellten Vorrichtung, jeweils in einer gegenüber der Fig. 1 vergrösserten Darstellung;

Fig. 2a      die zwei durch das Beleuchtungssystem auf dem Messkörper erzeugten Lichtpunkte in einer Ansicht von oben, und

Fig. 2b      einen Schnitt durch den Sondenkopf entlang der Linie A-A in Fig. 2.

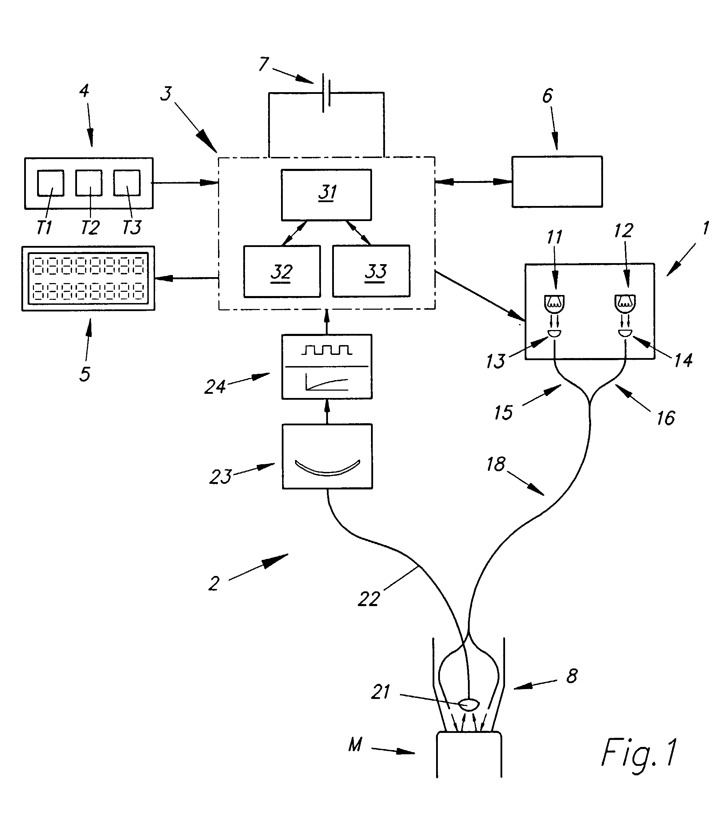

Anhand der Fig. 1 soll der prinzipielle Aufbau einer Vorrichtung zur Bestimmung der Farbvalenz von transluzenten Körpern näher erläutert werden. Die Vorrichtung weist im wesentlichen ein Beleuchtungssystem 1, ein Lichterfassungssystem 2, eine Prozessoreinheit 3, einen Tastaturblock 4, eine Anzeige 5, eine serielle Schnittstelle 6 sowie eine Stromversorgung 7 auf. Der zu vermessende Körper ist mit M bezeichnet.

Das Beleuchtungssystem 1 besteht im wesentlichen aus zwei Lichtquellen 11, 12 und optisch über je eine Linse 13, 14 mit letzteren gekoppelten Lichtleiterfaserbündeln 15, 16 zum Beleuchten des Messkörpers M. Das Lichterfassungssystem dient dem Erfassen des vom Messkörper M reflektierten Lichts und besteht aus einer Linse 21, einem zugehörigen Lichtleiter 22, einem Spektrometer 23 sowie einem A/D -Wandler 24. Die Prozessoreinheit verfügt über einen Mikroprozessor 31 mit zugehörigem RAM- und ROM-Speicher 32, 33. Das Tastaturfeld 4 verfügt über mehrere Tasten T1, T2, T3 zum Bedienen der Vorrichtung. Die Anzeige 5 weist vorzugsweise eine alphanumerische LCD-Einheit auf. Als Schnittstelle ist ein serielles Standard-Interface vorgesehen. Zur Speisung der Vorrichtung ist schliesslich eine Batterie 7 vorhanden.

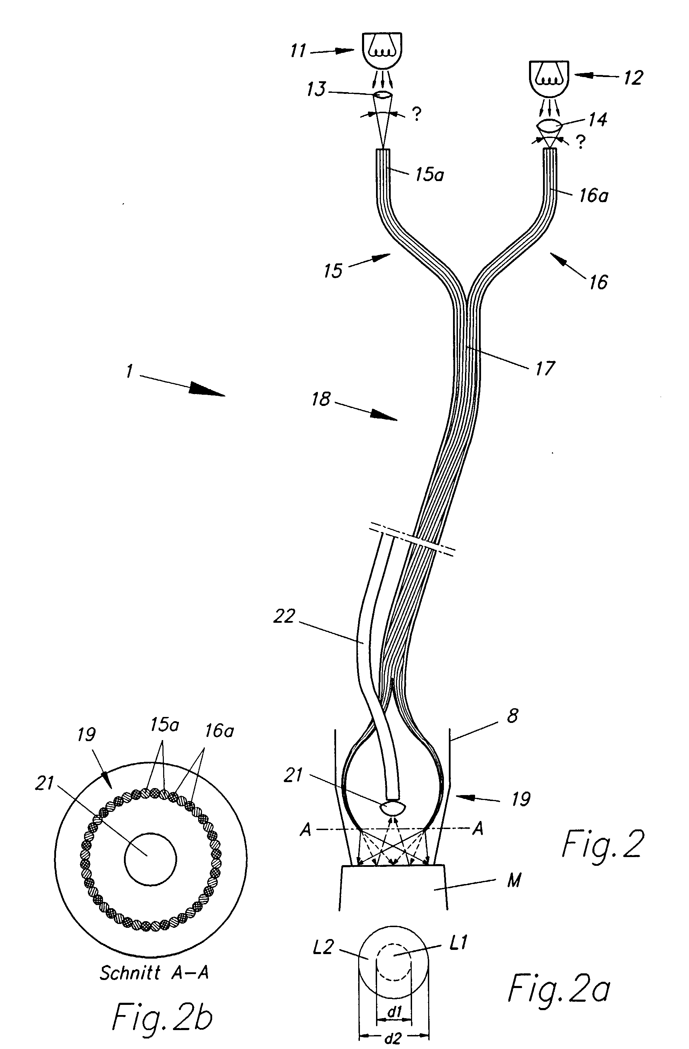

Fig. 2 zeigt schematisch und gegenüber der Fig. 1 in vergrös-serter Darstellung die prinzipielle Ausbildung des Beleuchtungssystems 1 zusammen mit der Linse 21 und zugehörigem Lichtleiter 22. Die zur Beleuchtung vorgesehenen Lichtleiterfaserbündel sind dabei im Längsschnitt dargestellt.

Zur Erzeugung von zwei unterschiedlich grossen Lichtpunkten ist ein Lichtleiterfasersystem 18 vorgesehen, welches folgendermassen aufgebaut ist: Auf der Lichteinkoppelungsseite besteht das Lichtleiterfasersystem 18 aus zwei getrennten Lichtleiterfaserbündeln 15, 16, wobei das erste Lichtleiterfaserbündel 15 eine Anzahl Fasern 15a und das zweite Lichtleiterfaserbündel 16 eine Anzahl Fasern 16a aufweist. Die beiden Lichtleiterfaserbündel 15, 16 sind hinter den Lichtquellen 11, 12 zu einem gemeinsamen Strang 17 zusammengeführt. In diesem Strang 17 werden die einzelnen Fasern 15a und 16a der beiden Lichtleiterfaserbündel 15, 16 physisch zu einem einheitlichen Strang verdrillt und derart miteinander vermischt, dass die unterschiedlichen Fasern 15a, 16a bezüglich des Strang-Querschnitts möglichst gleichmässig verteilt sind. Auf dem der Lichteinkoppelungsseite abgewandten Ende werden die einzelnen Fasern 15a, 16a zu einem ringförmigen Faserbündel 19 aufgeteilt, in welchem die einzelnen Fasern 15a, 16a gleichmässig verteilt über der Ringfläche angeordnet sind. In diesem Endbereich sind die ringförmig angeordneten Lichtleiterfasern 15a, 16a in einem Sondenkopf 8 fixiert. Die Lichtleiterfasern 15a, 16a sind im Sondenkopf 8 zudem derart ausgerichtet, dass die Verlängerung der jeweiligen Längsmittelachsen der Lichtleiterfasern 15a, 16a zumindest annähernd auf einer durch das vordere Ende des Sondenkopfes 8 gelegten Fläche zusammentreffen.

Zur Veranschaulichung der Verteilung der einzelnen Fasern 15a, 16a im Sondenkopf 8 wird auf die Fig. 2b verwiesen, in welcher der Sondenkopf 8 in einem Querschnitt entlang der Linie A-A in Fig. 2 vergrössert dargestellt ist. Die Fig. 2b soll dabei in schematischer Darstellung lediglich die ringförmige Anordnung und die gleichmässige Verteilung der einzelnen Fasern 15a, 16a im Sondenkopf 8 aufzeigen. In der Praxis wird jedoch eine ungleich grössere Anzahl von Fasern verwendet.

Als Lichtquellen sind zwei Glühlampen 11, 12 vorgesehen, welche über je eine Linse 13, 14 optisch mit je einem Lichtleiterbündel 15, 16 gekoppelt sind. Beim ersten der beiden Lichtleiterbündel 15 wird das Licht unter einem Winkel $\alpha$ von ca. 20° eingekoppelt, währenddem beim zweiten Lichtleiterbündel 16 das Licht unter einem Winkel $\beta$ von ca. 60° eingekoppelt wird. Um solch unterschiedliche Einkoppelungswinkel $\alpha$, $\beta$ zu erreichen, bieten sich insbesondere zwei Möglichkeiten an:

1. Es werden Fasern 15a, 16a mit unterschiedlichen Akzeptanzwinkeln verwendet, oder

2. dem jeweiligen Faserbündel 15, 16 wird eine den Lichteinfallswinkel begrenzende Optik vorgeschaltet, wie dies im vorliegenden Fall durch die Linsen 13, 14 angedeutet ist.

Natürlich können diese beiden Möglichkeiten auch miteinander kombiniert werden.

Wird nun die, bezogen auf das vorliegende Ausführungsbeispiel, linke Lampe 11 aktiviert, welche die Lichtleiterfasern 15a unter einem Winkel $\alpha$ von ca. 20° bestrahlt, so wird auf dem Messkörper M ein Lichtpunkt L1 mit dem Durchmesser dl (Fig. 2a) erzeugt. Durch Aktivieren der anderen, der rechten Lampe 12 kann der Messkörper M mit einem Lichtpunkt L2 des Durchmessers d2 (Fig. 2a) bestrahlt werden. Durch ein derartig ausgestaltetes Lichtleiterfaserbündel 18 können somit zwei unterschiedlich grosse, koaxiale Lichtpunkte L1, L2 auf dem Messkörper erzeugt werden.

Zur Erfassung des vom Messkörper M reflektierten Lichtes ist im Zentrum des Sondenkopfes 8 die Linse 21 angeordnet. Diese Linse 21 ist optisch mit einem weiteren, zum Spektrometer 23 (Fig. 1) führenden Lichtleiterbündel 22 gekoppelt. Dieses Lichtleiterbündel 22 ist ebenfalls nur schematisch dargestellt.

Der Sondenkopf 8 dient zugleich als Abstandshalter, indem dieser die Lichtleiterfasern nach vorne derart überragt, dass die ringförmig angeordneten Lichtleiterfasern 19 und die Linse 21 gegenüber der Messkörperoberfläche eine definierte Distanz aufweisen, wenn der Sondenkopf 8 am Messkörper M anliegt.

Wird die aufgezeigte Vorrichtung zur Bestimmung der Farbvalenz von Zähnen eingesetzt, so muss diese natürlich entsprechend kompakt aufgebaut sein. Der Sondenkopf 8 dürfte in diesem Fall einen Durchmesser in der Grössenordnung von 6 - 9 mm aufweisen.

Nachfolgend soll nun die prinzipielle Funktionsweise der Vorrichtung unter Bezugnahme auf die Fig. 1, 2 und 2a näher erläutert werden. Da die Funktionsweise von gattungsgemässen, Mikroprozessor-gesteuerten Vorrichtungen an und für sich bekannt ist, wird nur auf die im Zusammenhang mit der Erfindung wesentlichen Merkmale eingegangen.

Zum Erfassen von Referenzdaten wird mit der Vorrichtung als erstes ein Messvorgang an einer opaken Referenzprobe durchgeführt. Dazu wird der Sondenkopf 8 der Vorrichtung an die Referenzprobe herangeführt und der Messvorgang durch Betätigen einer auf dem Tastaturfeld 4 angeordneten Taste T1 ausgelöst. Beim eigentlichen Messvorgang werden nacheinander die beiden Lampen 11 und 12 aktiviert, so dass die Referenzprobe zuerst mit dem Lichtpunkt L1 kleineren Durchmessers dl und danach mit dem Lichtpunkt L2 grösseren Durchmessers d2 beleuchtet wird. Über die Linse 21 und den damit gekoppelten Lichtleiter 22 wird jeweils das von der Referenzprobe reflektierte Licht erfasst, und an das Spektrometer 23 weitergeleitet, wo es in bekannter Weise in seine spektralen Bestandteile zerlegt und in entsprechende Analogsignale gewandelt wird. Diese DC-Signale werden danach im A/D-Wandler 24 digitalisiert und in einem Speicherbaustein 32 der Prozessoreinheit 3 abgelegt. Die beiden auf diese Weise erfassten Referenzwerte sollen mit $a$ und $b$ bezeichnet werden, wobei $a$ für die Messung mit dem kleineren und $b$ für die Messung mit dem grösseren Lichtpunkt steht. Diese beiden Referenzmessungen können zeitlich und örtlich unabhängig vom Messvorgang am eigentlichen Messkörper durchgeführt werden. Die Referenzmessungen dienen einerseits dem Abgleichen der Vorrichtung; andererseits können auf diese Weise Alterungserscheinungen der für die Messung relevanten Bauteile kompensiert werden.

Nach dem Erfassen der Referenzdaten kann der eigentliche Messvorgang zur Bestimmung der Farbvalenz des Messkörpers M durchgeführt werden, bzw. es kann eine beliebige Anzahl Messungen an verschiedenen Messkörpern durchgeführt werden. Nachdem der Sondenkopf 8 an den Messkörper M herangeführt worden ist, wird der eigentliche Messvorgang durch Betätigen einer weiteren Taste T2 am Tastaturfeld 4 ausgelöst. Dabei werden nacheinander drei Messungen durchgeführt. Die beiden ersten Messungen entsprechen denjenigen am Referenzkörper, indem der Messkörper M mit zwei unterschiedlich grossen Lichtpunkten L1, L2 beleuchtet und der jeweilige Messwert in der vorgängig beschriebenen Weise ermittelt und abgelegt wird. Die beiden am Messkörper M ermittelten Messwerte sollen mit c und d bezeichnet werden. Die dritte Messung wird durchgeführt, ohne dass der Messkörper M beleuchtet wird. Auf diese Weise kann ein dem Umgebungslicht proportionaler Messwert e erfasst werden.

Aus diesen fünf Messungen, welches alles Spektralmessungen, also Funktionen der Wellenlänge f($\lambda$) sind, kann nun annähernd das korrekte Remissionsspektrum R($\lambda$) ermittelt werden, also das Remissionsspektrum R($\lambda$), das man erhalten hätte, wenn der Messfleck mit unendlich grossem Lichtfleck beleuchtet worden wäre, indem:

-    das Umgebungslicht von den Messwerten c und d jeweils subtrahiert wird:

$$c1(\lambda) = c(\lambda) - e(\lambda)$$

$$d1(\lambda) = d(\lambda) - e(\lambda)$$

-    die unterschiedliche Helligkeit der Beleuchtung korrigiert wird, indem durch die Referenzdaten dividiert wird:

$$c2(\lambda) = c1(\lambda)/a(\lambda)$$

$$d2(\lambda) = d1(\lambda)/b(\lambda)$$

-    danach eine dem Lichtverlust infolge Transluzenz entsprechende Korrektur zu den Remissionsdaten d2($\lambda$) addiert wird:

$$d3(\lambda) = d2(\lambda) + f(d2(\lambda), c2(\lambda))$$

-    und nun die Remissionsdaten d3($\lambda$) mit den Remissionsdaten der Referenzprobe multipliziert werden;

$$R(\lambda) = d3(\lambda) \cdot R_{REF}(\lambda).$$

Aus den Remissionsdaten R($\lambda$) kann nun die Korrekte Farbvalenz der Probe ermittelt werden, wobei das Verfahren dazu allgemein bekannt ist.

Die Remissionsdaten der Referenzprobe wurden vorgängig, beispielsweise beim Hersteller der Vorrichtung, mit einem beliebigen Remissionsspektralphotometer gemessen und in einem Speicherbaustein der Vorrichtung abgelegt. Ebenso wurde die Funktion f(d2, c2) vorgängig ermittelt, indem, beispielsweise durch den Hersteller der Vorrichtung, die Messdaten verschiedener Proben mit unterschiedlichen Remissionsdaten und unterschiedlicher Transluzenz in der Vorrichtung bzw. in einem Speicherbaustein der Vorrichtung abgelegt werden. Diese Proben werden jeweils mit einem ersten Lichtpunkt mit Durchmesser dl, einem zweiten Lichtpunkt mit Durchmesser d2 und einem dritten Lichtpunkt mit möglichst grossem Durchmesser beleuchtet und die entsprechenden Messwerte abgelegt. Der sich aus der Beleuchtung mit dem dritten Lichtpunkt ergebende Messwert entspricht dann dem Funktionswert von f(d2, c2). Die jeweiligen Funktionswerte können dann anschliessend in Tabellenform in einem Speicherbaustein der Vorrichtung abgelegt werden.

Um im Falle der Messung von Zahnfarben bzw. der Bestimmung der korrekten Zusammensetzung der Prothese die am besten übereinstimmende Zusammensetzung auswählen zu können, werden vorgängig die bereits genannten Musterprothesen mit der Vorrichtung vermessen. Dies kann entweder direkt durch den Hersteller der Vorrichtung erfolgen, oder der Anwender der Vorrichtung vermisst die Musterprothesen selber. Die Farbvalenzen der Musterprothesen werden dann im Speicher der Vorrichtung abgelegt. Nach dem Messen des natürlichen Zahnes kann die Vorrichtung ohne weiteres diejenige Musterprothese aus einem Sortiment auswählen, deren Farbvalenz empfindungsmetrisch am ehesten dem natürlichen Zahn entspricht, d.h. diejenige Musterprothese auswählen, die zum natürlichen Zahn den geringsten Farbabstand aufweist. Die Berechnung des Farbabstandes ist aus der Fachliteratur ebenfalls bekannt.

Über die serielle Schnittstelle 6 der Vorrichtung können sowohl Daten abgerufen wie auch eingelesen werden. Beispielsweise könnte die Vorrichtung über die serielle Schnittstelle 6 von einem PC bedient und die erfassten Messwerte danach über den PC auf einen Drucker ausgegeben werden. Allenfalls könnten über die Schnittstelle auch Korrekturwerte in die Vorrichtung eingelesen werden.

Zu erwähnen ist, dass bezüglich des vorgängig beschriebenen Verfahrens unzählige weitere Varianten denkbar sind. Auch das zuvor umschriebene Ausführungsbeispiel der Vorrichtung kann keinesfalls als abschliessend betrachtet werden. So könnten beispielsweise die Lichtquellen direkt im Sondenkopf angeordnet werden. Anstelle von Lichtquellen mit einer vorgeschalteten, den Einfallswinkel begrenzenden Optik könnten auch Lichtleiterfasern mit unterschiedlichen Akzeptanzwinkeln eingesetzt werden. Zudem können beispielsweise auch drei unterschiedliche Fasertypen bzw. unter unterschiedlichem Winkel beleuchtete Fasern eingesetzt werden, wobei die Anzahl der Messungen mit unterschiedlich grossen Lichtpunkten natürlich dementsprechend erhöht werden könnte.

Das gesamte Beleuchtungs- und Erfassungssystem könnte jedoch auch umgekehrt werden, indem der Messkörper nur mit einem Lichtpunkt beleuchtet wird und die Erfassung des vom Messkörper reflektierten Lichts auf zwei unterschiedlich grossen Erfassungsflächen erfolgt. Dazu könnten beispielsweise zwei unabhängige Optiken vorgesehen werden. Denkbar wäre jedoch auch, dass nur eine Erfassungsoptik verwendet wird, welcher beispielsweise eine Blende vorgeschaltet ist, mittels der die Erfassungsfläche variierbar ist. Als weitere Variante sind natürlich auch zwei Lichtquellen in Kombination mit zwei Erfassungsoptiken denkbar.

Soll die Vorrichtung in der Zahntechnik angewendet werden, um die Farbe einer Prothese zu bestimmen, könnten beispielsweise die beiden der einzusetzenden Prothese benachbarten Zähne vermessen, deren Mittelwert bestimmt und letzterer als Messwert ausgegeben werden.

## Patentansprüche

1. Verfahren zur Bestimmung der Farbvalenz von transluzenten Körpern, indem der Messkörper partiell beleuchtet und das von letzterem reflektierte Licht auf einer Fläche definierter Grösse erfasst und rechnerisch ausgewertet wird, dadurch gekennzeichnet, dass zumindest zwei Messungen mit jeweils unterschiedlich grosser Beleuchtungsfläche und/oder unterschiedlich grosser Erfassungsfläche durchgeführt werden, dass aufgrund der Messwerte und anhand von an opaken Referenzproben ermittelten Referenzwerten ein Korrekturfaktor errechnet wird, mittels welchem die Messwerte korrigiert und damit die Farbvalenz des Messkörpers unter Berücksichtigung der Transluzenz desselben bestimmt wird.

2. Verfahren nach Anspruch 1, dadurch gekennzeichnet, dass zur Bestimmung des Umgebungslichtes eine zusätzliche Messung am Messkörper ohne Beleuchtung durchgeführt und der dabei ermittelte Messwert bei der rechnerischen Auswertung berücksichtigt wird.

3. Verfahren nach Anspruch 1 oder 2, dadurch gekennzeichnet, dass die Referenzwerte ermittelt werden, indem zumindest zwei Messungen mit jeweils unterschiedlich grosser Beleuchtungsfläche und/oder unterschiedlich grosser Erfassungsfläche an einer opaken Referenzprobe durchgeführt werden.

4. Verfahren nach Anspruch 3, dadurch gekennzeichnet, dass an der opaken Referenzprobe zwei Messungen mit jeweils unterschiedlich grosser Beleuchtungsfläche durchgeführt und die dabei ermittelten Referenzwerte abgespeichert werden, dass danach am Messkörper zwei Messungen mit jeweils unterschiedlich grosser Beleuchtungsfläche durchgeführt werden, und dass am Messkörper eine zusätzlich Messung ohne Beleuchtung durchgeführt wird, wobei der ohne Beleuchtung ermittelte Messwert von den beiden mit Beleuchtung am Messkörper ermittelten Messwerten rechnerisch subtrahiert wird.

5. Verfahren nach einem der vorhergehenden Ansprüche, dadurch gekennzeichnet, dass die rechnerisch ermittelte Farbvalenz des Messkörpers mit den in einer Tabelle aufgrund von an transluzenten Referenzproben ermittelten Referenzwerten verglichen und der dem rechnerisch ermittelten Wert am nächsten kommende Referenzwert optisch zur Anzeige gebracht wird.

6. Verfahren nach einem der vorhergehenden Ansprüche zur Bestimmung der Farbvalenz von Zahnprothesen, bei welchem die Farbvalenz des/der der zu erstellenden Prothese benachbarten Zahns/Zähne ermittelt wird/werden.

7. Verfahren nach Anspruch 6, dadurch gekennzeichnet, dass die der ermittelten Farbvalenz des Messkörpers am nächsten liegende Musterprothese ermittelt und deren Zuordnungsnummer optisch angezeigt wird.

8. Vorrichtung zur Bestimmung der Farbvalenz von transluzenten Körpern, mit einer Lichtquelle zum Beleuchten des Messkörpers (M), einer Optik (21) zum Erfassen des vom Messkörpers (M) reflektierten Lichts und einer Mikroprozessoreinheit (3) zum Auswerten der Messdaten, dadurch gekennzeichnet, dass zumindest zwei Lichtquellen (11, 12) zum Erzeugen unterschiedlich grosser Beleuchtungsflächen (L1, L2) und/oder zumindest zwei Optiken (21) zum Erfassen des reflektierten Lichts auf unterschiedlich grossen Flächen vorgesehen sind.

9. Vorrichtung nach Anspruch 8, mit einem Sondenkopf (8), welcher mit Mitteln zum Beleuchten des Messkörpers (M) und zur Erfassung des von letzterem reflektierten Lichts versehen ist, dadurch gekennzeichnet, dass als Mittel zum Erzeugen von unterschiedlich grossen Beleuchtungsflächen Lichtleiterfasern (15a, 15b) vorgesehen sind, welche unterschiedliche Akzeptanzwinkel aufweisen oder unter unterschiedlichen Winkeln bestrahlt sind.

10. Vorrichtung nach Anspruch 8 oder 9, dadurch gekennzeichnet, dass zwei Lichtquellen (11, 12) vorgesehen sind, welche optisch mit je einem aus einer Vielzahl von einzelnen Fasern (15a, 16a) bestehenden Lichtleiterfaserbündel (15, 16) gekoppelt sind, wobei die beiden Lichtleiterfaserbündel (15, 16) hinter den Lichtquellen (11, 12) zu einem gemeinsamen Strang (17) zusammengeführt sind, und wobei der gemeinsame Strang (17) im Sondenkopf (8) zu einer ringförmigen Lichtquelle (19) aufgeteilt ist, deren einzelne Fasern (15a, 16a) bezüglich der Ringfläche gleichmässig verteilt sind.

11. Vorrichtung nach einem der Ansprüche 8 bis 10, dadurch gekennzeichnet, dass die Erfassungsoptik (21) zentrisch im Sondenkopf (8) angeordnet ist.

12. Vorrichtung nach einem der Ansprüche 9 bis 11, dadurch gekennzeichnet, dass die Lichtleiterfasern (15a, 16a) unter unterschiedlichen Winkeln bestrahlt sind, wobei den Lichtleiterfasern (15a, 16a) je eine Linse (13, 14) zur Winkelbegrenzung des in das jeweilige Lichtleiterfaserbündel (15, 16) eingekoppelten Lichts vorgeschaltet ist.

13. Vorrichtung nach einem der Ansprüche 9 bis 12, dadurch gekennzeichnet, dass der Sondenkopf (8) als Abstandshalter ausgebildet ist, indem dessen Vorderteil das lichtaustrittsseitige Ende der Lichtleiterfasern (15a, 16a) nach vorne überragt.

14. Vorrichtung nach einem der Ansprüche 9 bis 13, dadurch gekennzeichnet, dass die Verlängerung der jeweiligen Längsmittelachsen der Lichtleiterfasern (15a, 16a) zumindest annähernd auf einer durch das vordere Ende des Sondenkopfes gelegten Fläche zusammentreffen.

15. Vorrichtung nach einem der Ansprüche 8 bis 14, dadurch gekennzeichnet, dass elektronische Speicherbausteine (32, 33) zur Abspeicherung von Referenzwerten und/oder Korrekturfaktoren vorgesehen sind.

16. Vorrichtung nach einem der Ansprüche 8 bis 15, dadurch gekennzeichnet, dass eine alphanumerische Anzeige (5) zur Darstellung des Messergebnisses und/oder der dem vermessenen Messkörper bezüglich der Farbvalenz nächstliegenden Musterprothese angezeigt wird.

Fig.1

Fig. 2

Fig. 2a

Schnitt A–A

Fig. 2b

EP 0 777 113 A1

Europäisches
Patentamt

**EUROPÄISCHER RECHERCHENBERICHT**

Nummer der Anmeldung

EP 96 81 0803

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 604 276 A (BERTIN & CIE) 29.Juni 1994<br>* Spalte 2, Zeile 25 - Zeile 43 *<br>--- | 1,3,6,8 | G01J3/46<br>A61C19/10 |
| A | EP 0 360 657 A (BERTIN & CIE) 28.März 1990<br><br>* Zusammenfassung *<br>--- | 1,4-8,<br>14-16 | |
| A | EP 0 335 192 A (PACIFIC SCIENTIFIC CO)<br>4.Oktober 1989<br>* Spalte 1, Zeile 4 - Spalte 2, Zeile 26 *<br>* Spalte 3, Zeile 15 - Spalte 4, Zeile 27;<br>Anspruch 1 *<br>--- | 1,8-10 | |
| A | WO 87 03470 A (BERTIN & CIE) 18.Juni 1987<br>* Anspruch 1 *<br>----- | 1,8,9,15 | |

| | | | RECHERCHIERTE SACHGEBIETE (Int.Cl.6) |
|---|---|---|---|
| | | | G01J<br>A61C<br>G01N |

Der vorliegende Recherchenbericht wurde für alle Patentansprüche erstellt

| Recherchenort | Abschlußdatum der Recherche | Prüfer |
|---|---|---|
| DEN HAAG | 26.Februar 1997 | Scheu, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

10